# EUROPEAN PATENT APPLICATION

(11) **EP 1 382 912 A1**
(43) Date of publication of application: **21.01.2004**
(21) Application number: 02705427.9
(22) Date of filing: 22.03.2002
(51) Int. Cl.: F24C 7/02, G06F 17/60

(54) **COOKING-RELATED INFORMATION PROVIDING SYSTEM, COOKING-RELATED INFORMATION PROVIDING APPARATUS, COOKING APPARATUS, COOKING-RELATED INFORMATION PROVIDING METHOD, COOKING-RELATED INFORMATION FETCH METHOD, COOKING-RELATED INFORMATION PROVIDING PROGRAM, AND COOKING-RELATED INFORMATION FETCH PROGRAM**

(30) Priority: 22.03.2001 JP 2001082153
(71) Applicant: MATSUSHITA ELECTRIC INDUSTRIAL CO., LTD., Kadoma-shi, Osaka 571-8501 (JP)
(72) Inventor: KUDO, Takahiro, Katano-shi, Osaka 576-0021 (JP); MATSUURA, Satoshi, Kyotanabe-shi, Kyoto 610-0331 (JP); OZAWA, Jun, Nara-shi, Nara 631-0005 (JP); SANO, Masaaki, Kamo-cho, Soraku-gun, Kyoto 619-1152 (JP); KASHIMOTO, Takashi, Nara-shi, Nara 630-8001 (JP)
(74) Representative: Grünecker, Kinkeldey, Stockmair & Schwanhäusser Anwaltssozietät
(86) International application number: PCT/JP2002/002735
(87) International publication number: WO 2002/077534

(57) **Abstract**

For the purpose of readily providing or acquiring recipe data suitable to a user of a microwave oven, or the like, a recommended data determination section (508) determines recommendation menu items based on history information about a use history of the microwave oven, or the like, which is transmitted from a sender, and a recommendation rule stored in a recommendation rule database (507). Information representing the determined recommendation menu items is transmitted from a data transmission section (506).

When an instruction to transmit recipe data as to any of the recommendation menu items is transmitted by a sender, cooking information including the recipe data indicated by the instruction, and the like, is read from a cooking menu database (509) and transmitted from the data transmission section (506).

## Description

### Technical Field

The present invention relates to a technique for providing cooking-related information, such as cooking information, maintenance information for a cooking apparatus, or the like, to a cooking apparatus, such as a microwave oven, or the like, which displays cooking procedure data (recipe data) and controls cooking according to control data, based on cooking information including such cooking procedure data and control data for a cooking apparatus.

### Background Art

Organizing a menu of a meal (cooking menu) is a great trouble for many housewives. In an already marketed microwave oven conceived for the purpose of eliminating such a trouble, a plurality of pieces of recipe data are stored in a memory of the microwave oven, and desired recipe data are retrieved from the stored recipe data for organizing a menu which includes dishes to be actually cooked.

However, the amount of data which can be stored in the memory of the microwave oven is limited. In view of such, various methods for updating data in the memory have been proposed.

For example, Japanese Unexamined Patent Publication No. 2000-134676 proposes a method for updating cooking information in a microwave oven wherein cooking information provided through a terrestrial television wave is received by a television receiver, and necessary part of the cooking information is transferred to the microwave oven through a remote controller.

Japanese Unexamined Patent Publications Nos. 2000-346366 and 2000-346367 propose an update method wherein cooking information laid open on a homepage on the Internet is downloaded to a personal computer and then transferred to a microwave oven through a device called a relay box.

However, both the data received in the form of a terrestrial television wave and the data laid open on the homepage include more than what a user actually desires or requires. Thus, the user himself/herself needs to select data he/she desires from a large amount of data . This task is sometimes very troublesome, and many users do not like such a task. Therefore, a conventional system for providing/acquiring cooking information has a difficulty in readily acquiring desired cooking information and making use of the acquired cooking information.

### Disclosure of Invention

An objective of the present invention is to reduce the user's efforts in selecting one or some pieces from a large amount of data and to readily acquire information suitable for the user.

For the purpose of solving the above problem, according to the present invention, a menu item suitable to or necessary for a user of a cooking apparatus is recommended based on history information associated with cooking by the user, e.g., a use history of a microwave oven, whereby the user readily obtains information suitable to himself/herself with reduced efforts.

Specifically, a solution offered by the invention of claim 1 is a cooking-related information providing system for providing to a cooking apparatus cooking-related information including cooking data which relates to at least one of a cooking procedure and a dish title, the system comprising: selected information acquisition means for acquiring selected information which represents cooking data selected among the cooking data already obtained by the cooking apparatus according to a preference of a person associated with cooking; cooking-related information selection means for selecting at least one piece of cooking-related information from a plurality of pieces of cooking-related information based on the selected information; and cooking-related information providing means for providing the selected cooking-related information to the cooking apparatus.

According to the invention of claim 1, cooking-related information to be provided is selected according to selected information which represents cooking data selected according to the preferences of a person associated with cooking. Therefore, appropriate recipe data of a menu item, or the like, can readily be provided or acquired.

The invention of claim 2 is a cooking-related information providing apparatus for providing to a cooking apparatus cooking-related information including cooking data which relates to at least one of a cooking procedure and a dish title, the apparatus comprising: selected information acquisition means for acquiring selected information which represents cooking data selected among the cooking data already obtained by the cooking apparatus according to a preference of a person associated with cooking; cooking-related information selection means for selecting at least one piece of cooking-related information from a plurality of pieces of cooking-related information based on the selected information; and cooking-related information providing means for providing the selected cooking-related information to the cooking apparatus.

According to the invention of claim 2, cooking-related information to be provided is also selected according to selected information which represents cooking data selected according to the preferences of a person associated with cooking. Therefore, appropriate recipe data of a menu item, or the like, can readily be provided.

The invention of claim 3 is the cooking-related information providing apparatus of claim 2, wherein acquisition of the selected information by the selected information acquisition means and provision of the cooking-related information by the cooking-related information providing means are performed through communication means.

According to the invention of claim 3, appropriate recipe data of a menu item, or the like, can readily be selected as described above. Therefore, appropriate recipe data, or the like, can be provided even when the recipe data, or the like, is selected from a large amount of recipe data through communication means, such as a network, or the like.

The invention of claim 4 is the cooking-related information providing apparatus of claim 2, wherein the selected information which represents the cooking data selected according to the preference of the person associated with cooking is information representing cooking data as to which cooking is done by the cooking apparatus according to a cooking procedure represented by the cooking data.

According to the invention of claim 4, recipe data, or the like, is selected based on information representing cooking data as to which cooking is actually done. Therefore, more appropriate recipe data, or the like, can be provided.

The invention of claim 5 is the cooking-related information providing apparatus of claim 4, wherein the selected information which represents the cooking data selected according to the preference of the person associated with cooking further includes information representing the frequency of cooking performed by the cooking apparatus according to a cooking procedure represented by the cooking data.

According to the invention of claim 5, the recipe data, or the like, is selected according to the frequency of cooking actually done. Therefore, more appropriate recipe data, or the like, can be provided.

The invention of claim 6 is the cooking-related information providing apparatus of claim 5, wherein the cooking-related information includes information about maintenance of the cooking apparatus, the maintenance information corresponding to the frequency of cooking performed by the cooking apparatus.

According to the invention of claim 6, information about maintenance of the cooking apparatus is provided according to the frequency of cooking actually done as described above. Therefore, appropriate maintenance information can be provided as the recipe data can be.

The invention of claim 7 is the cooking-related information providing apparatus of claim 2, wherein the acquired selected information is abandoned after the provision of the cooking-related information.

The invention of claim 8 is the cooking-related information providing apparatus of claim 2, further comprising selected information accumulating means for accumulating the acquired selected information.

Even in the case where the acquired selected information is abandoned or accumulated, appropriate recipe data, or the like, can be provided as described above.

The invention of claim 9 is a cooking apparatus for acquiring cooking-related information including cooking data which relates to at least one of a cooking procedure and a dish title, the cooking apparatus comprising: selected information output means for outputting selected information which represents cooking data selected among the cooking data already obtained by the cooking apparatus according to a preference of a person associated with cooking; and cooking-related information acquisition means for acquiring at least one piece of cooking data selected from a plurality of pieces of cooking-related information based on the selected information.

According to the invention of claim 9, cooking-related information to be provided is also selected according to selected information which represents cooking data selected according to the preferences of a person associated with cooking. Therefore, appropriate recipe data of a menu item, or the like, can readily be acquired.

The invention of claim 10 is the cooking apparatus of claim 9, wherein outputting of the selected information by the selected information output means and acquisition of the cooking-related information by the cooking-related information acquisition means are performed through communication means.

According to the invention of claim 10, appropriate recipe data of a menu item, or the like, can readily be selected as described above. Therefore, appropriate recipe data, or the like, can be acquired even when the recipe data, or the like, is selected from a large amount of recipe data through communication means, such as a network, or the like.

The invention of claim 11 is the cooking apparatus of claim 9, wherein outputting of the selected information by the selected information output means and acquisition of the cooking-related information by the cooking-related information acquisition means are performed through a removable recording medium.

According to the invention of claim 11, the recipe data described above can readily be acquired even when the cooking apparatus cannot be connected to the communication means.

The invention of claim 12 is the cooking apparatus of claim 9, wherein the selected information which represents the cooking data selected according to the preference of the person associated with cooking is information representing cooking data as to which cooking is done by the cooking apparatus according to a cooking procedure represented by the cooking data.

According to the invention of claim 12, recipe data, or the like, is selected based on information representing cooking data as to which cooking is actually done. Therefore, more appropriate recipe data, or the like, can be provided.

The invention of claim 13 is the cooking apparatus of claim 9, wherein the selected information which represents the cooking data selected according to the preference of the person associated with cooking further includes information representing the frequency of cooking performed by the cooking apparatus according to a cooking procedure represented by the cooking data.

According to the invention of claim 13, the recipe data, or the like, is selected according to the frequency of cooking actually done. Therefore, more appropriate recipe data, or the like, can be provided.

The invention of claim 14 is the cooking apparatus of claim 9, wherein the cooking-related information includes information about maintenance of the cooking apparatus, the maintenance information corresponding to the frequency of cooking performed by the cooking apparatus.

According to the invention of claim 14, information about maintenance of the cooking apparatus is provided according to the frequency of cooking actually done as described above. Therefore, appropriate maintenance information can be acquired as the recipe data can be.

The invention of claim 15 is a cooking-related information providing method for providing to a cooking apparatus cooking-related information including cooking data which relates to at least one of a cooking procedure and a dish title, the method comprising: a selected information acquisition step of acquiring selected information which represents cooking data selected among the cooking data already obtained by the cooking apparatus according to a preference of a person associated with cooking; a cooking-related information selection step of selecting at least one piece of cooking-related information from a plurality of pieces of cooking-related information based on the selected information; and a cooking-related information providing step of providing the selected cooking-related information to the cooking apparatus.

The invention of claim 16 is a cooking-related information acquisition method for acquiring cooking-related information including cooking data which relates to at least one of a cooking procedure and a dish title, the method comprising: a selected information output step of outputting selected information which represents cooking data selected among the already-obtained cooking data according to a preference of a person associated with cooking; and a cooking-related information acquisition step of acquiring at least one piece of cooking-related information selected from a plurality of pieces of cooking-related information based on the selected information.

The invention of claim 17 is a cooking-related information providing program for providing to a cooking apparatus cooking-related information including cooking data which relates to at least one of a cooking procedure and a dish title, the program instructing a computer to execute the following steps: a selected information acquisition step of acquiring selected information which represents cooking data selected among the cooking data already obtained by the cooking apparatus according to a preference of a person associated with cooking; a cooking-related information selection step of selecting at least one piece of cooking-related information from a plurality of pieces of cooking-related information based on the selected information; and a cooking-related information providing step of providing the selected cooking-related information to the cooking apparatus.

The invention of claim 18 is a cooking-related information acquisition program for acquiring cooking-related information including cooking data which relates to at least one of a cooking procedure and a dish title, the program instructing a computer to execute the following steps: a selected information output step of outputting selected information which represents cooking data selected among the already-obtained cooking data according to a preference of a person associated with cooking; and a cooking-related information acquisition step of acquiring at least one piece of cooking-related information selected from a plurality of pieces of cooking-related information based on the selected information.

The invention of claim 19 is a cooking-related information providing system for providing to a cooking apparatus cooking-related information including cooking data which relates to at least one of a cooking procedure and a dish title, comprising: history information acquisition means for acquiring history information which represents cooking data selected in a cooking apparatus among the cooking data already obtained by the cooking apparatus; cooking-related information selection means for selecting at least one piece of cooking-related information from a plurality of pieces of cooking-related information based on the selected information; and cooking-related information providing means for providing the selected cooking-related information to at least one of the cooking apparatus and a person who uses the cooking apparatus.

Also with the above inventions, cooking-related information to be provided is selected according to selected information representing cooking data selected according to the preferences of a person associated with cooking which includes a cooking history. Therefore, appropriate recipe data of a menu item can readily be provided or acquired.

### Brief Description of Drawings

FIG. **1** is a block diagram showing the entire structure of a cooking-related information providing system of embodiment 1.
FIG. **2** is a perspective view showing a general appearance of a microwave oven according to embodiment 1.
FIG. **3** is a front view showing an example of an operation input section and a display section of the microwave oven according to embodiment I .
FIG. **4** is a block diagram showing a functional structure of the principal part of the microwave oven according to embodiment 1.
FIG. **5** is a block diagram showing the hardware structure of the principal part of the microwave oven according to embodiment 1.
FIG. **6** illustrates an example of a memory structure of a storage medium according to embodiment 1.
FIG. **7** is a block diagram showing a functional structure of the principal part of an information terminal device according to embodiment 1.
FIG. **8** is a block diagram showing a functional structure of the principal part of a server according to embodiment 1.
FIG. **9** illustrates a display example when recipe data is selected according to embodiment 1.
FIG. **10** illustrates a display example when cooking is performed according to embodiment 1.
FIG. **11** is a flowchart illustrating the operation of the microwave oven according to embodiment 1.
FIG. **12** illustrates an example of history information according to embodiment 1.
FIG. **13** illustrates a display example when recipe data is downloaded according to embodiment 1.
FIG. **14** is a flowchart illustrating the operation of the information terminal device and server.
FIG. **15** illustrates an example of history information, and the like, which are transferred from the information terminal device to the server according to embodiment 1.
FIG. **16** illustrates an example of contents stored in a recommendation rule database according to embodiment 1.
FIG. **17** illustrates another example of contents stored in the recommendation rule database according to embodiment 1.
FIG. **18** illustrates still another example of contents stored in the recommendation rule database according to embodiment 1.
FIG. **19** illustrates a display example of recommendation menu items according to embodiment 1.
FIG. **20** illustrates an example of a request for transfer of cooking information from the information terminal device to the server.
FIG. **21** is a block diagram showing a functional structure of the principal part of a server according to embodiment 2.
FIG. **22** illustrates. an example of contents stored in a user history database according to embodiment 2.
FIG. **23** illustrates an example of contents stored in a service rule database according to embodiment 2.
FIG. **24** illustrates an example of contents stored in a cooking menu database according to embodiment 2.
FIG. **25** illustrates an example of updated contents stored in the user history database according to embodiment 2.
FIG. **26** illustrates a display example of a service message according to embodiment 2.

### Best Mode for Carrying Out the Invention

### (Embodiment 1)

### (General structure of cooking-related information providing system)

Hereinafter, a cooking-related information providing system according to embodiment 1 of the present invention is described with reference to the drawings, wherein cooking information including cooking procedure data (recipe data and cooking data) and control data for cooking apparatus (cooking-related information) are provided to a microwave oven (cooking apparatus) having an oven heating function and a high frequency heating function.

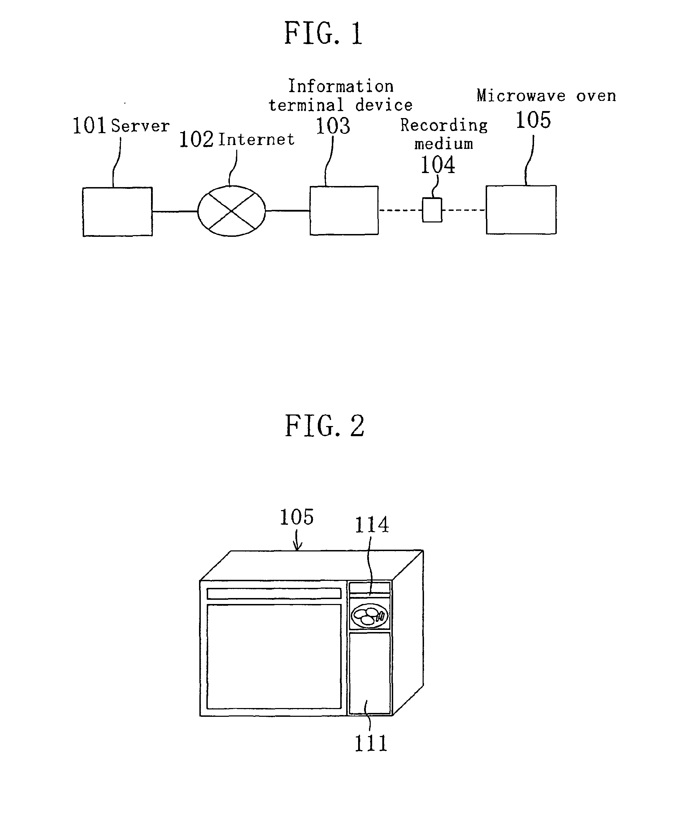

FIG. **1** is a block diagram showing the entire structure of the cooking-related information providing system. In FIG. **1,** the components of the cooking-related information providing system are denoted by the following reference numerals.

Reference numeral **105** denotes a microwave oven, which is an example of the cooking apparatus.

Reference numeral **103** denotes an information terminal device, such as a personal computer, a cellular phone, a simple information terminal device, or the like.

Reference numeral **104** denotes a removable recording medium, such as a memory card. The recording medium **104** transfers cooking information including cooking procedure data and control data for the microwave oven, and history information which relates to a use history of the microwave oven **105**, or the like, between the microwave oven **105** and the information terminal device **103**. In the case where the microwave oven **105** is directly connected to the Internet **102,** the information terminal device **103** and the recording medium **104** may be omitted.

Reference numeral **102** denotes the Internet, which is an example of a communication infrastructure.

Reference numeral **101** denotes a server for providing the cooking information directed to the microwave oven **105**.

### (Specific structure of microwave oven 105)

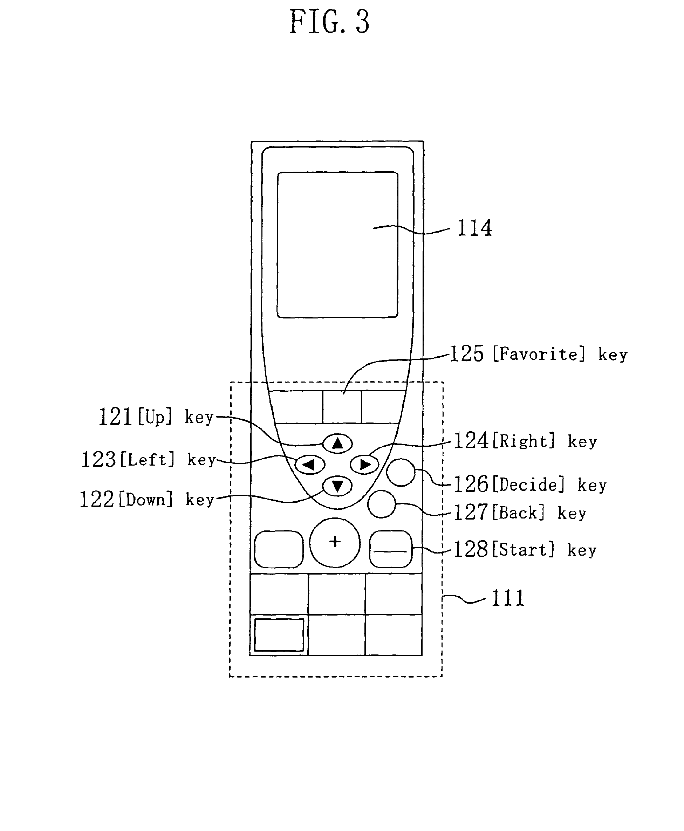

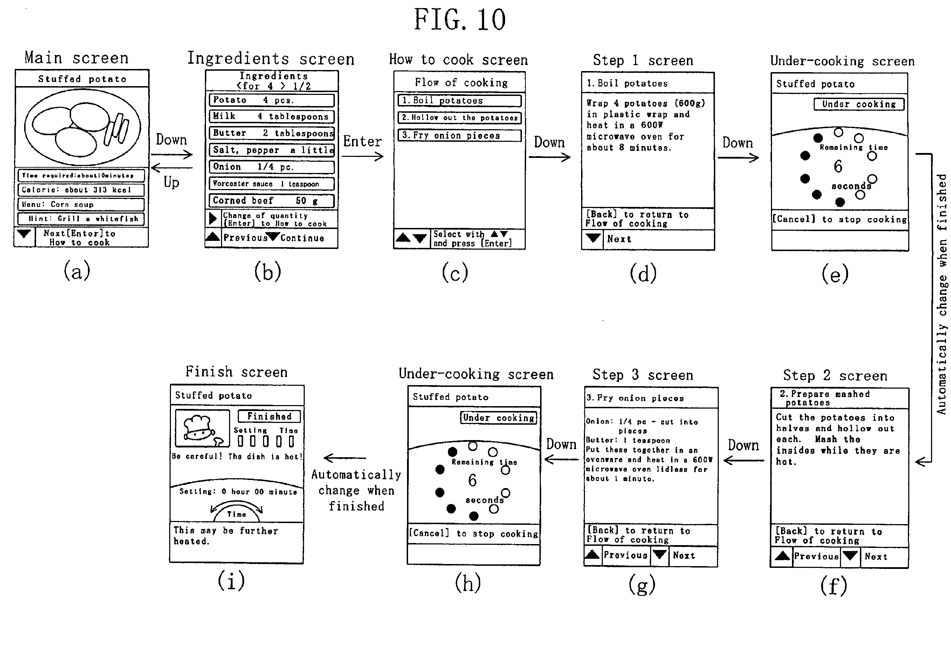

The microwave oven **105** specifically has the appearance shown in FIG. **2** and includes an operation input section **111** and a display section **114,** such as a liquid crystal screen, or the like. The operation input section **111** has a "Up" key **121**, a "Down" key **121,** a "Left" key **123,** a "Right" key **124,** a "Favorite" key **125,** a "Decide" key **126,** a "Back" key **127,** and a "Start" key **128**, as shown in FIG. **3.** In the microwave oven **105,** cooking procedures of various menu items can be displayed on the display section **114**, and the heating time and heating power are automatically controlled according to the display of the cooking procedures as described later (FIG. **10**). With such features, cooking can readily be done.

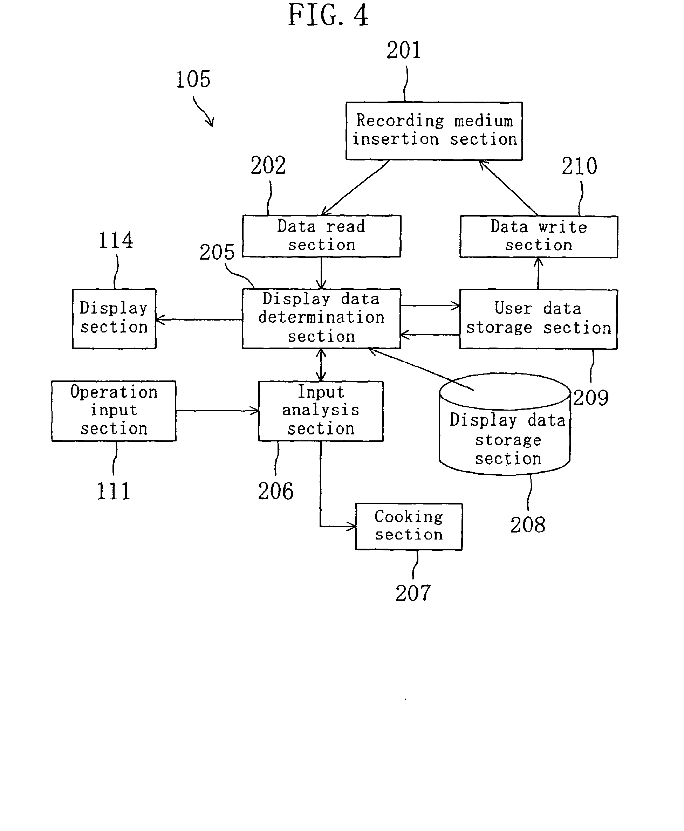

The microwave oven **105** has a functional structure shown in FIG. **4**, for example. In FIG. **4,** the components of the microwave oven **105** are denoted by the following reference numerals.

Reference numeral **201** denotes a recording medium insertion section in which the recording medium **104** is to be inserted.

Reference numeral **202** denotes a data read section (cooking-related information acquisition section) for reading data, such as cooking information recorded in the recording medium **104** inserted in the recording medium insertion section **201**.

Reference numeral **205** denotes a display data determination section for determining a content to be displayed on the display section **114** and controlling the display thereof based on data output from the data read section **202**, a display data storage section **208**, a user data storage section **209**, and an input analysis section **206**, which will be described later. The display data determination section **205** temporarily stores information that specifies the currently displayed content.

Reference numeral **206** denotes the input analysis section for analyzing an operation in the operation input section **111** to instruct the display data determination section **205** what to display according to the operation. The input analysis section **206** instructs the operation of a cooking section **207**, which is a primary part of the microwave oven **105**, according to a cooking instruction operation in the operation input section **111**.

Reference numeral **208** denotes the display data storage section for storing display data previously set for display on the display section **114**, such as font data and image data, for example. The display data storage section **208** stores a program for operating the microwave oven **105**, or the like.

Reference numeral **209** denotes the user data storage section for storing history information which relates to the use history of the microwave oven **105**, for example, information of menu items that were actually cooked using the microwave oven **105** while the cooking procedures were displayed on the display section **114**, and information of menu items which were registered into the "Favorite" list (instructed so as to be displayed afterward prior to the other information such that it can readily be selected) were made when the cooking procedures of the menu items were displayed on the display section **114** (information corresponding to the displayed data on the one-to-one basis).

Reference numeral **210** denotes a data write section (selected information output means) for writing a part or the entirety of information stored in the user data storage section **209** in the recording medium **104** when the recording medium **104** is inserted into the recording medium insertion section **201**.

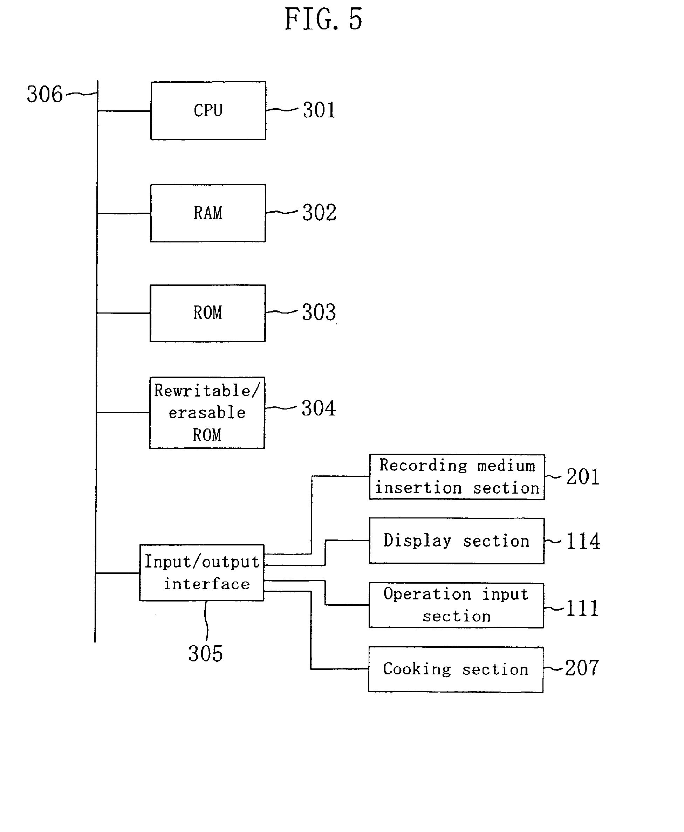

The microwave oven **105** has a hardware structure shown in FIG. **5**, for example. That is, a CPU **301,** a RAM **302**, a ROM (e.g., mask ROM) **303,** a rewritable/erasable ROM (e.g., flash ROM or EEPROM) **304** and an input/output interface **305** are connected to each other through a bus **306.** The input/output interface **305** is connected to the recording medium insertion section **201**, the display section **114,** the operation input section **111** and the cooking section **207.** The ROM **303** mainly functions as the display data storage section **208**. The rewritable ROM **304** mainly functions as the user data storage section **209**. The CPU **301** operates based on, for example, a program stored in the ROM **303** so as to function as the display data determination section **205** or the input analysis section **206**.

### (Memory structure of recording medium 104)

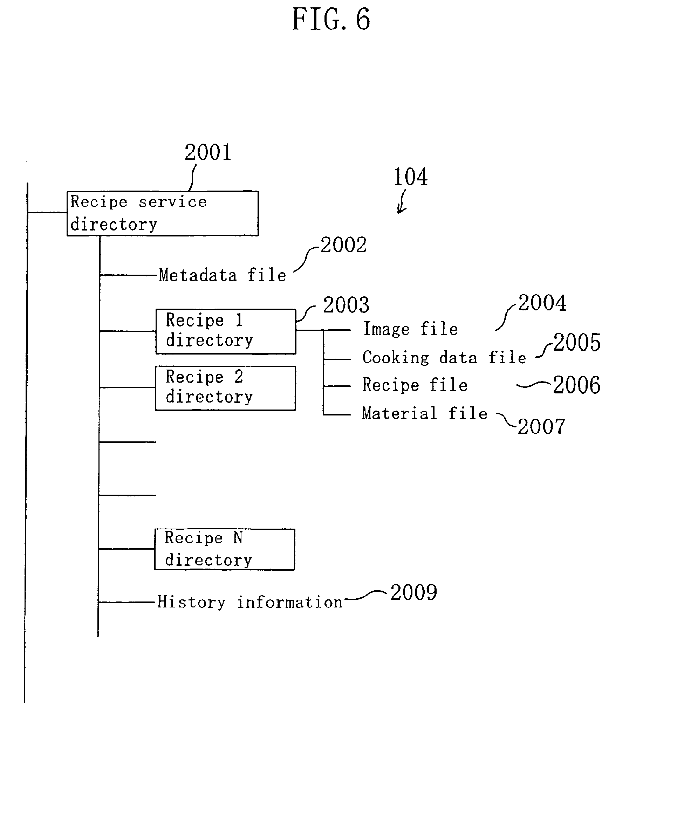

The recording medium **104** stores information files in a directory structure having a hierarchy shown in FIG. **6**, for example. That is, the root of the recording medium **104** has a recipe service directory **2001** for storing cooking information. Immediately under the recipe service directory **2001**, a metadata file **2002**, recipe directories (recipe 1 directory to recipe N directory) **2003** for storing cooking information, and history information **2009** are provided. The metadata file **2002** stores management information which relates to cooking information stored in the recipe service directory **2001**. The management information is used when retrieving cooking information or recording new cooking information in the recording medium **104**. Each recipe directory **2003** includes: an image file **2004** which is image data, for example, an image of a completed menu item, an image providing an advice about how to cook, or the like; a cooking data file **2005** which relates to control data for controlling a microwave oven used for cooking, for example, a temperature setting or power (heating power); a recipe file **2006** which is recipe data showing a cooking procedure; and a material file **2007** which shows necessary materials and the quantity thereof. The format of the cooking information used herein for display is not limited to any format, but desirably is described in a Markup Language, such as HTML, XML and XHTML, in view of readiness in display processing.

It should be noted that the memory structure of the recording medium **104** is not limited to the above structure, but may be arranged in accordance with the processing performed in the microwave oven **105** and the information terminal device **103**. For example, the history information may be stored in the form of the metadata file **2002**.

### (Specific structure of information terminal device 103)

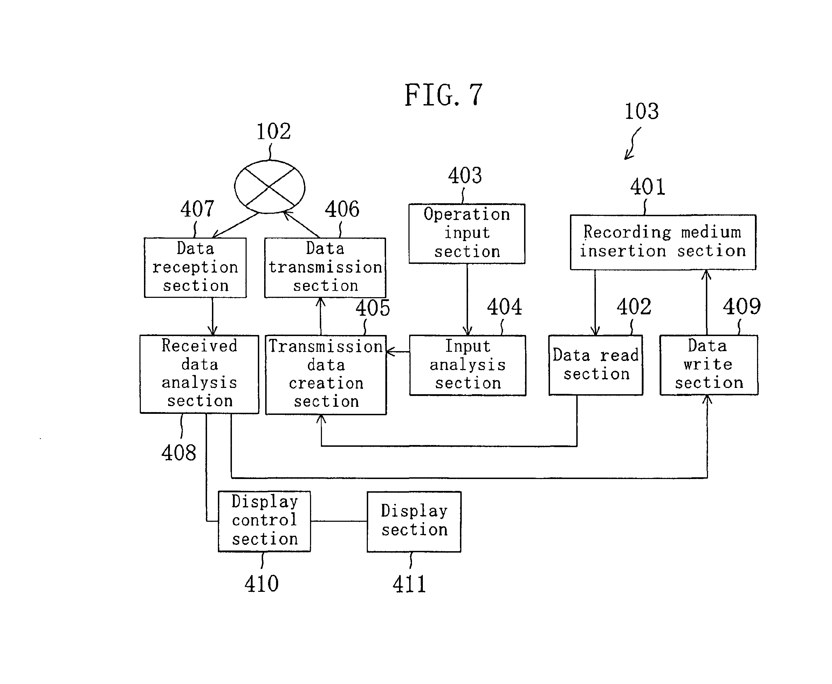

The information terminal device **103** has a specific structure shown in FIG. **7**, for example.

Reference numeral **401** denotes a recording medium insertion section for inserting the recording medium **104**, which is similar to the recording medium insertion section **201** of the microwave oven **105**.

Reference numeral **402** denotes a data read section for reading the history information, or the like, which is recorded by the microwave oven **105**, from the recording medium **104** inserted in the recording medium insertion section **401.**

Reference numeral **409** denotes a data write section for writing cooking information downloaded from the server **101**, or the like, in the recording medium **104** inserted in the recording medium insertion section **401**.

Reference numeral **403** denotes an operation input section for inputting instructions by a user, for example, an instruction for establishing a connection to the Internet **102,** an instruction for downloading cooking information, or the like.

Reference numeral **404** denotes an input analysis section for analyzing an operation performed in the operation input section **403** and instructing the operation of each section according to the operation.

Reference numeral **405** denotes a transmission data creation section for generating transmission data which includes various information and instructions and which is to be transmitted through the Internet **102**.

Reference numeral **406** denotes a data transmission section for transmitting the transmission data generated by the transmission data creation section **405** through the Internet **102**.

Reference numeral **407** denotes a data reception section for receiving various data from the Internet **102**.

Reference numeral **408** denotes a received data analysis section for analyzing data received by the data reception section **407** and issuing an instruction for writing in the recording medium **104** and a display instruction for displaying a data content, or the like.

Reference numeral **410** denotes a display control section for controlling the display according to the display instruction from the received data analysis section **408**. This display control is specifically achieved by Internet Explorer™ from Microsoft Corporation, Netscape from Netscape Communications Corporation, or the like, and the display is performed based on data described in a Markup Language, such as HTML, XML and XHTML. It should be noted that the present invention is not limited to the above, but an application program created exclusively for the information terminal device **103** may be employed.

Reference numeral **411** denotes a display section for displaying characters, images, or the like, under the control of the display control section **410**.

The hardware structure of the information terminal device **103** is substantially the same as that of the microwave oven **105**, except that the cooking section **207** is not provided, and it is not necessary to provide the rewritable ROM 304. In the case where the information terminal device **103** is formed by a personal computer, or the like, the operation input section **403** and the display section **411** are generally realized by a mouse, a keyboard, a computer display, or the like. In general, such a personal computer has a large capacity storage device, such as a hard disk.

### (Specific structure of server 101)

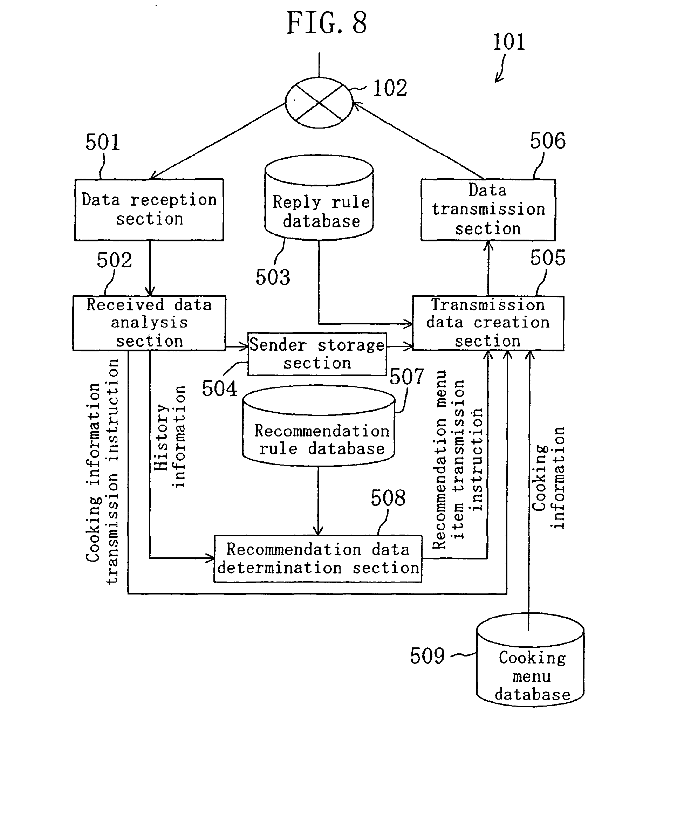

The server **101** has a specific structure shown in FIG. **8,** for example.

Reference numeral **501** denotes a data reception section for receiving various information and data representing requests that are transmitted through the Internet **102**.

Reference numeral **502** denotes a received data analysis section (selected information acquisition means) for analyzing data received by the reception section **501** and specifying the content and sender of the data.

Reference numeral **504** denotes a sender storage section for storing sender information indicating the sender.

Reference numeral **508** denotes a recommendation data determination section for determining a menu item to be recommended to the sender based on the history information transmitted from the sender, e.g., information about the use history of the microwave oven **105**, or the like.

Reference numeral **507** denotes a recommendation rule database for storing a recommendation rule used for determining a menu item to be recommended.

Reference numeral **509** denotes a cooking menu database for storing cooking information, such as recipe data of recommendation menu item candidates and control data of the microwave oven **105** which is used for cooking the menu item.

Reference numeral **505** denotes a transmission data creation section (cooking-related information providing means) for generating transmission data (reply) to be transmitted to the sender according to a request from the sender which is analyzed by the received data analysis section **502** based on the cooking information stored in the cooking menu database **509**.

Reference numeral **503** denotes a reply rule database for storing a reply rule which is used for generating transmission data in the transmission data creation section **505**.

Reference numeral **506** denotes a data transmission section for transmitting the generated transmission data to the sender through the Internet **102**.

Basically, the hardware structure of the server **101** is substantially the same as that of the information terminal device **103**.

Next, the operation of the cooking-related information providing system having the above structure is described separately for the operation achieved by the microwave oven **105** and the operation achieved by the information terminal device **103** and the server **101**.

### (Operation of the microwave oven 105 which is performed when recipe data is referred to or cooking is performed)

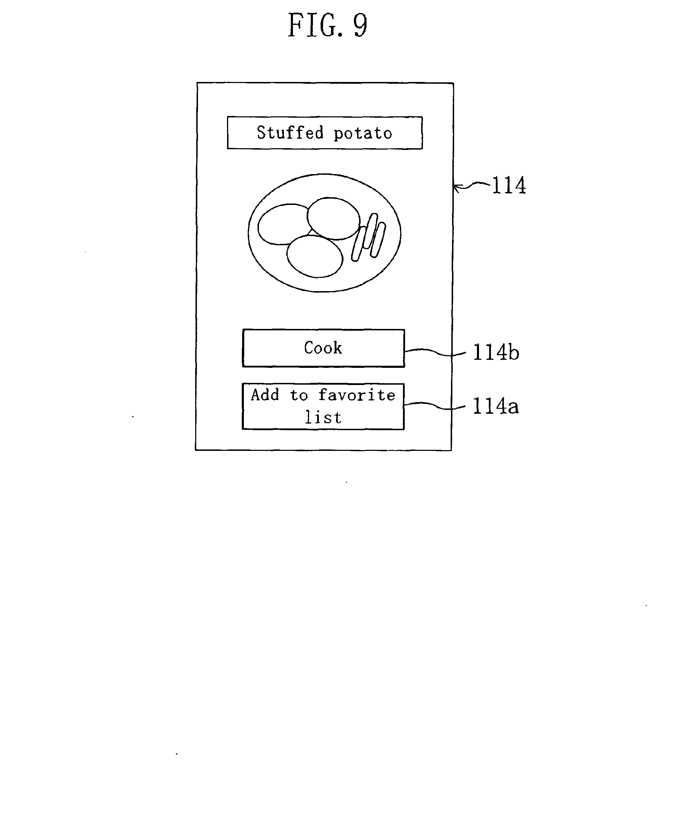

When an operation which instructs display of recipe data is made in the operation input section **111**, recipe data stored in the recording medium **104**, for example, is read by the data read section **202** and displayed on the display section **114** as shown in FIG. **9**. Then, when a "add to favorite list" button **114a** is selected, information indicating the menu item is stored in the user data storage section **209** as described later. (It should be noted that such a registration (selection) of a favorite menu item does not always require data which represents the cooking procedure but may be realized only with the dish title. That is, in this respect, the recipe data may include only the dish title.) When the "cook" button **114b** is selected, the cooking procedure is shown on the sequential display section **114** as shown in parts **(a)** through **(i)** of FIG. **10.** Specifically, principal data of "stuffed potato", such as a completed image, the time required for cooking, calorie, etc., are first displayed on a main screen **(a)**. Next, an "ingredients" screen **(b)** shows ingredients necessary for "stuffed potato" and the quantity thereof. In the "ingredients" screen, the quantity of the ingredients can be changed according to the number of family members, or the like. After the quantity of the ingredients is determined, a "how to cook" screen **(c)** is displayed and cooking is started. As the cooking progresses, screens (**(d)** to **(h)**) are sequentially changed while the cooking procedure is displayed. When the cooking is completed, a "finish" screen **(i)** is displayed. During the steps of displays **(e)** to **(h)**, control instructions are given to the cooking section **207**, such that the heating power and heating time are automatically controlled according to the menu item being cooked.

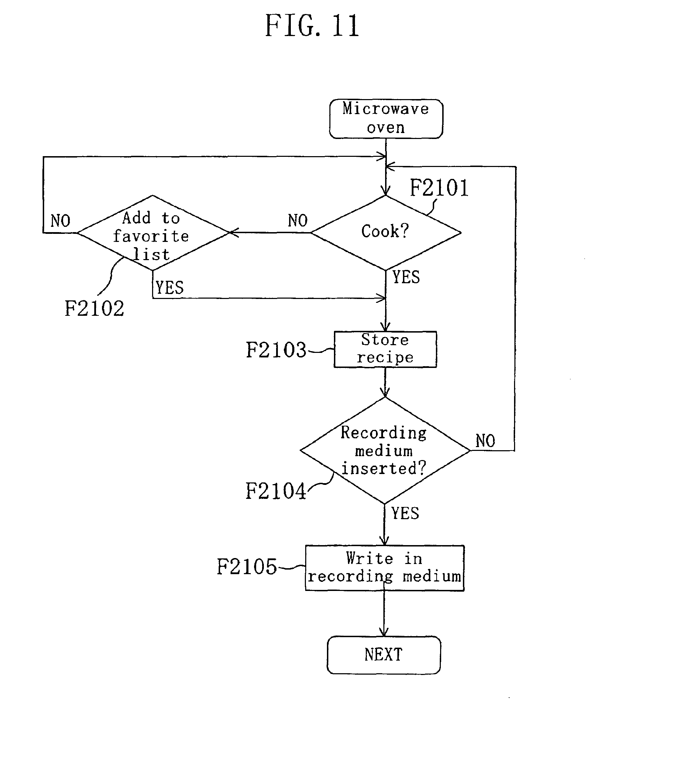

In the case where the operation of adding a favorite menu item or cooking is performed, the operation shown in FIG. **11** is performed so that information representing the menu item is recorded in the recording medium **104**.

(F2101): In the first place, the input analysis section **206** determines whether or not the above cooking is performed according to an operation performed in the operation input section **111.** This determination is preferably made at the time of completion of cooking (under the condition that the cooking is completed) as shown in FIG. **10(i)**. However, the above determination may be made at the time when the "cook" button **114b** of FIG. **9** is selected.

(F2102): If the cooking is not performed at Step F2101, the input analysis section **206** determines whether or not the operation of adding a favorite menu item is performed by the operation in the operation input section **111**.

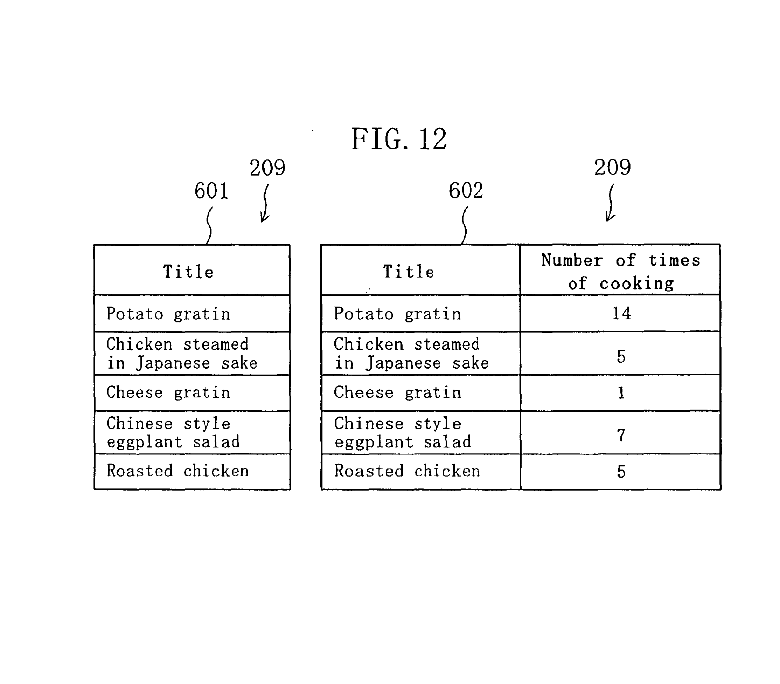

(F2103): If any of the above operations is not performed at Steps F2101 and F2102, the above processes are repeated. If any of the above operations is performed, the information representing the selected recipe which is temporarily stored in the display data determination section **205**, specifically, the title of the recipe "stuffed potato", the menu item number (ID) previously given to the menu item, etc., are stored in the user data storage section **209** as history information. A specific example of the history information is shown in FIG. **12**. The history information may store only the titles of menu items as shown in history information **601** of FIG. **12**, but is not limited to such a format. For example, the history information may store the number of times of cooking (the number of times the microwave oven **105** is used, the number of times a key of the operation input section **111** is depressed, the number of times a specific key is depressed, or the like) together with the titles of menu items as shown in history information **602.**

(F2104): Next, the data write section **210** determines whether or not the recording medium **104** is inserted in the data write section **210**. If not, Step F2101 and subsequent steps are repeated.

(F2105): If the recording medium **104** is inserted in the data write section **210**, the history information stored in the user data storage section **209** is written in the recording medium **104** by the data write section **210**. The time of recording in the recording medium **104** is not limited to the time of cooking or the time of operation of adding a favorite menu item, but may be the time when any of various predetermined write conditions is satisfied, for example, the time when the operation of starting cooking is performed (when a user decides to cook) or the time when insertion of the recording medium **104** in the recording medium insertion section **201** is detected. Furthermore, when the microwave oven **105** is directly connected to the Internet **102**, data stored in the user data storage section **209** may be transmitted to the server **101**, or the like, without passing through the recording medium **104**.

### (Operation of information terminal device 103 and server 101 which is performed when cooking information is provided)

When history information is transmitted from the information terminal device **103** to the server **101** and the cooking information of a recommendation menu item is provided (downloaded) based on the history information, the following operation is performed.

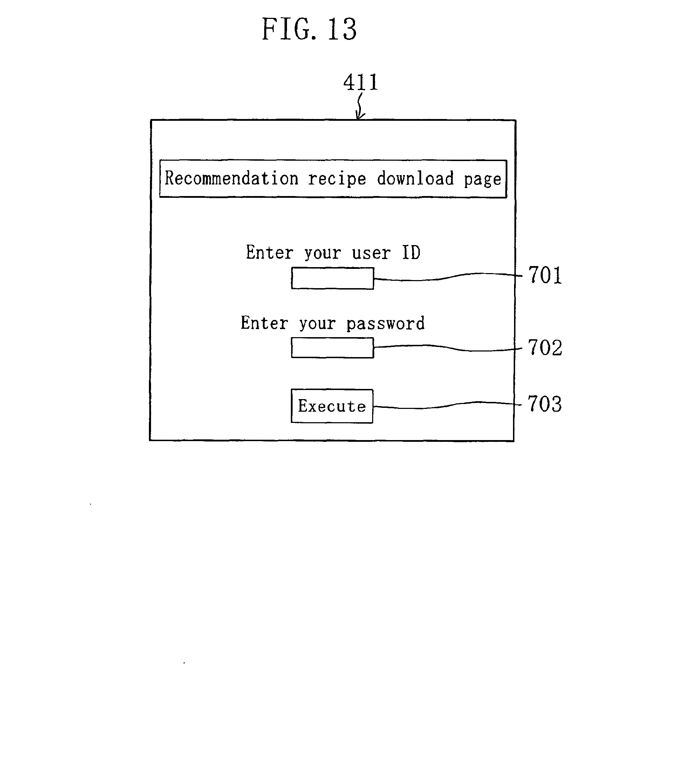

The recording medium **104** is first inserted in the recording medium insertion section **401** of the information terminal device **103**, and a browser for downloading of cooking information is activated by an operation in the operation input section **403** and the server **101** is accessed. As a result, a window for downloading is displayed on the display section **411** of the information terminal device **103** as shown in FIG. **13**.

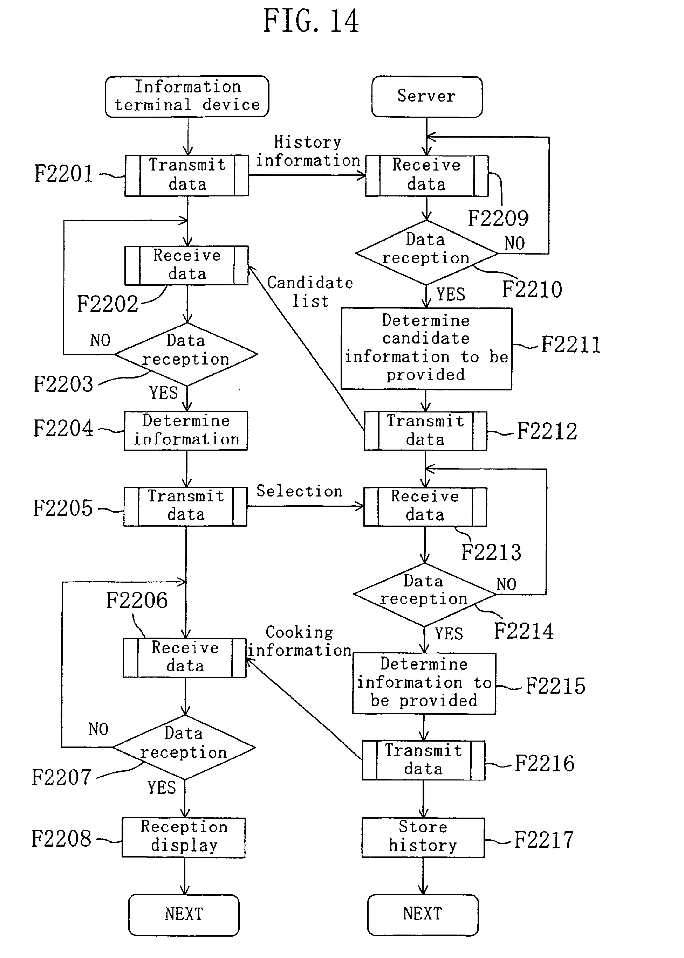

After a user ID and password for specifying a user are entered in an ID input section **701** and password input section **702**, respectively, and an "execute" button **703** is selected, the process of FIG. **14** is performed as described below.

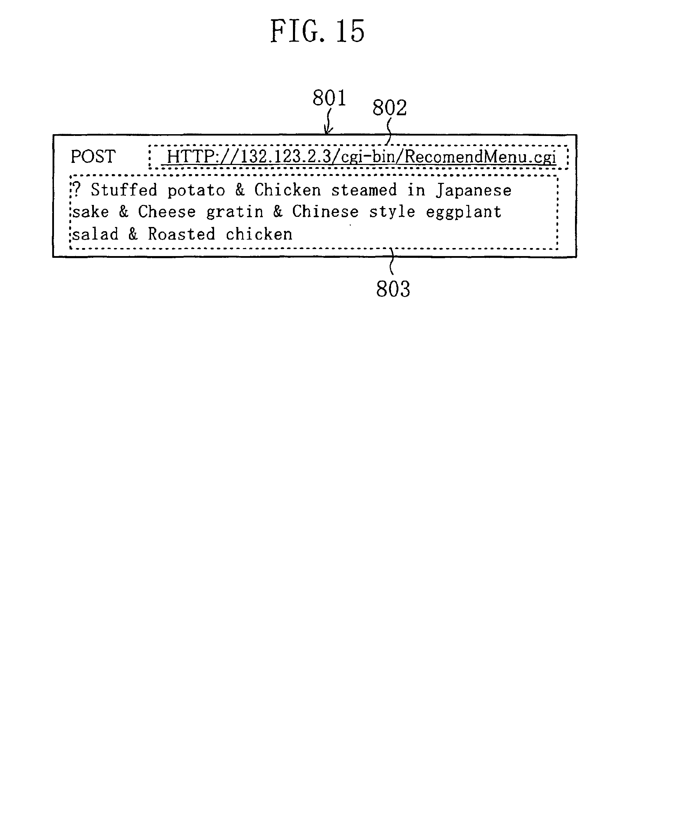

(F2201): The data transmission section **406** of the information terminal device **103** transmits the user ID and password to the server **101**. On the other hand, the data read section **402** reads the history information (FIG. **12**), which has been stored in the recording medium **104** as described above. The transmission data creation section **405** generates transmission data **801**, for example, based on HTTP (Hyper Text Transfer Protocol) as shown in FIG. **15**. The generated transmission data **801** is transmitted by the data transmission section **406**. In FIG. **15**, a program execution instruction section **802** of the transmission data **801** shows that the server **101** which is present at an IP address of 132.123.2.3 is instructed to execute "RecommendMenu.cgi". A history data section **803** shows the history information read from the recording medium **104**. The transmission data **801** includes a sender's IP address (sender information; not shown) based on TCP/IP. Furthermore, the number of times of use may be included in the history information (selected information output step).

(F2209): The reception section **501** of the server **101** performs reception processing on the transmission data transmitted from the data transmission section **406** of the information terminal device **103** to the server **101** through the Internet **102** (selected information acquisition step).

(F2210): It is determined whether or not the received data requires provision of cooking information as described above. If it is not a request for cooking information, the above reception processing is repeated. If it is a request for cooking information, the process proceeds to Step F2211.

(F2211): The received data analysis section **502** analyzes the received data to store the sender information in the sender storage section **504**. The sender information is referred to when the server **101** transmits cooking information, or the like. The received data analysis section **502** instructs the recommendation data determination section **508** to execute a program "RecommendMenu.cgi". According to this instruction, the recommendation data determination section **508** determines a menu item to be recommended based on the history information and a recommendation rule stored in the recommendation rule database **507**.

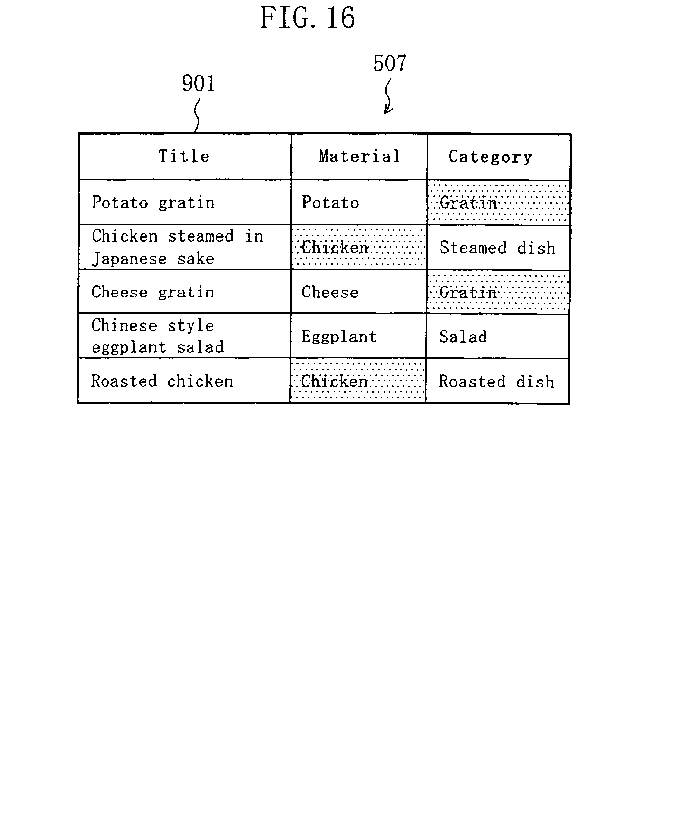

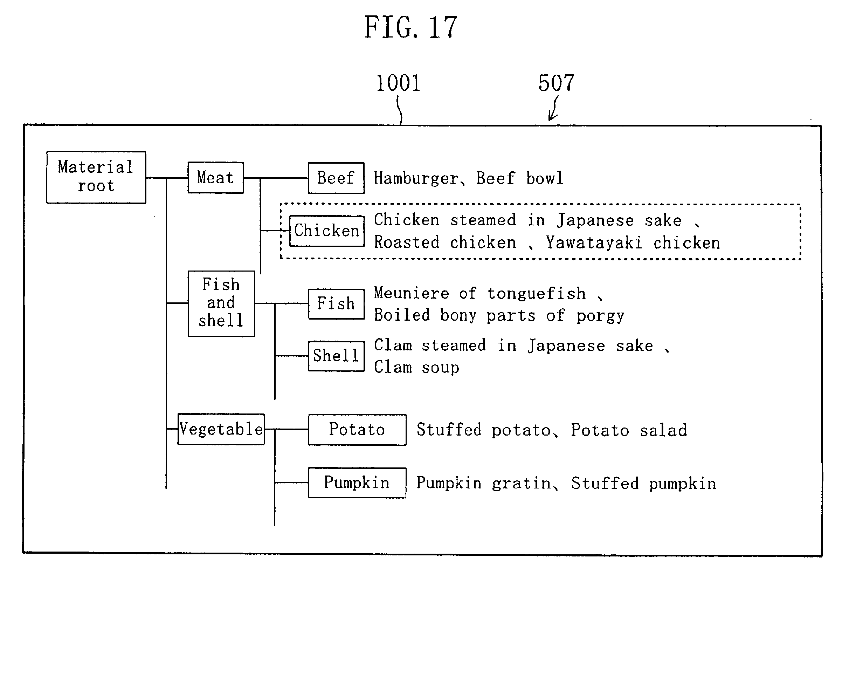

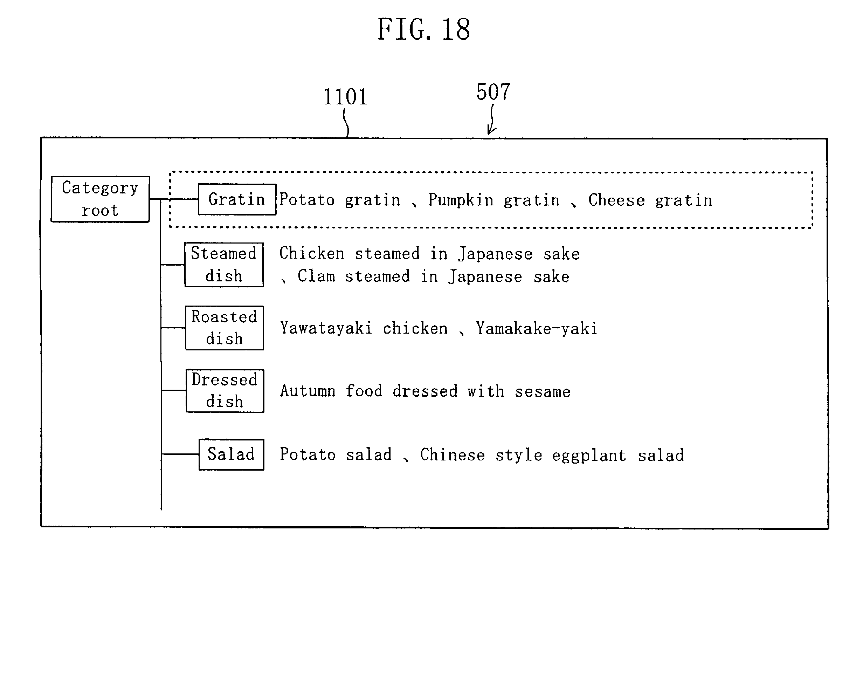

Determination of the recommendation menu item is specifically made as described below. As for the menu item shown in FIG. **16**, the recommendation rule database **507** stores a table **901** in which the materials of menu item and the categories of menu items correspond to menu items (the menu item entitled "potato gratin" is made from the material "potato", and the category thereof is "gratin"), a food material classification information **1001** in which food materials are classified in a hierarchical structure (tree structure) as shown in FIG. **17,** and a menu item category classification information **1101** in which the categories of menu items are classified in a hierarchical structure (tree structure) as shown in FIG. 18.

When the history information **601** (FIG. **12**) is received, the recommendation data determination section **508** refers to the table **901** (FIG. **16**) based on the menu items included in the history information **601,** i.e., "*potato gratin*", "*chicken steamed in Japanese sake*"*,* "*cheese gratin*", "*Chinese style eggplant salad*" and "*roasted chicken*". Checking through the columns of "food material" and "menu item category" in the table **901,** the recommendation data determination section **508** determines that the food material most frequently used is "chicken" and the menu item category most frequently selected is "gratin" (there is a high possibility that the food material preferred by the user is "chicken" and the menu item category preferred by the user is "gratin"). Then, the recommendation data determination section **508** refers to the food material classification information **1001** (FIG. **17**) based on the result of the above determination to select from chicken dishes a menu item which is not included in the history information, "*Yawatayaki chicken*". The recommendation data determination section **508** refers likewise to the menu item category classification information **1101** (FIG. **18**) to select "*pumpkin gratin*" and determines to offer these menu items as recommendation menu items (candidates for cooking information to be provided) (cooking-related information selection step).

(F2212): The transmission data creation section **505** generates transmission data including the recommendation menu items to be offered to a user (sender) based on the above determination, the sender information stored in the sender storage section **504**, and the reply rule stored in the reply rule database **503**. The data transmission section **406** transmits the generated transmission data to the information terminal device **103** through the Internet **102**.

(F2202): The data reception section **407** of the information terminal device **103** performs reception processing on the data transmitted from the server **101**.

(F2203): The received data analysis section **408** analyzes the received data to determine whether or not it is a reply from the server **101**. If it is not a reply from the server **101**, the above reception processing is repeated. If it is a reply from the server **101**, the process proceeds to Step F2204.

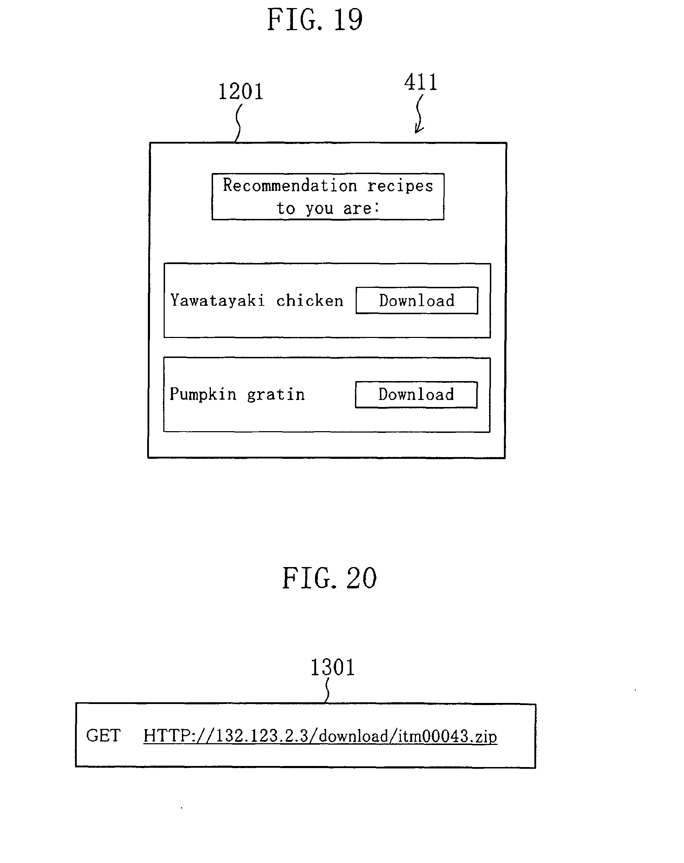

(F2204): The display control section **410** provides, for example, a recommendation menu item window **1201** shown in FIG. **19**, which informs that the cooking information about "*Yawatayaki chicken*" and "*pumpkin gratin*" can be downloaded. If an operation for selecting a download button in the window **1201** is performed by the operation input section **403,** the "*pumpkin gratin*", for example, is determined as a menu item for which the server **101** is requested to transmit the cooking information.

(F2205): According to the above operation, the input analysis section **404** instructs the transmission data creation section **405** to request the selected cooking information from the server **101**. According to the instruction, the transmission data creation section **405** generates transmission data **1301** as shown in FIG. **20**, for example. The generated transmission data is transmitted by the data transmission section **406**. In the transmission data **1301,** "itm00043.zip" is an ID (file name) which is unique to the cooking information of "*pumpkin gratin*". The information about this ID is described in the data received from the server **101**.

(F2213) and (F2214): As being done at Steps (F2209) and (F2210), the reception processing and determination of the received data are performed by the reception section **501** of the server **101**.

(F2215): The received data analysis section **502** analyzes the received data to determine for which of the recommendation menu items transmission of cooking information has been requested, and detects that transmission of cooking information about "*pumpkin gratin*" has been requested.

(F2216): According to the determination by the received data analysis section **502,** the transmission data creation section **505** refers to cooking information about "*pumpkin gratin*" identified by "itm00043.zip" in the cooking menu database **509** to generate transmission data including the cooking information. The data transmission section **406** transmits the generated transmission data to the sender which is stored in the sender storage section **504** through the Internet **102** (cooking-related information providing step).

(F2217): The history information transmitted from the user and the cooking information transmitted to the user may be stored as necessary.

(F2206) and (F2207): As being done at Steps (F2202) and (F2203), the reception processing and determination of the received data are performed by the data reception section **407** of the information terminal device **103** (cooking-related information acquisition step).

(F2208): The received data analysis section **408** outputs the cooking information about "*pumpkin gratin*", which is included in the received data, to the data write section **409.** The data write section **409** writes the cooking information in the recording medium **104**. Then, after the display informing that provision (downloading) of information from the server **101** has been completed is shown, the recording medium **104** is removed and inserted in the recording medium insertion section **201** of the microwave oven **105**, whereby cooking can be performed while the cooking procedure is displayed on the display section **114** as described above in FIG. **10**.

### (Embodiment 2)

Embodiment 2 of the present invention is described while illustrating an example of a server. The server of embodiment 2 has the function of accumulating use history information of the microwave oven **105** and download history information of cooking information, or the like, which are transmitted from the information terminal device **103**, in addition to the function of the server **101** of embodiment 1. Furthermore, the server of embodiment 2 provides information about maintenance of an apparatus as cooking-related information, in addition to the above cooking information. It should be noted that the components having functions equivalent to those described in embodiment 1 are denoted by the same reference numerals used in embodiment 1, and descriptions thereof are herein omitted.

### (Specific structure of server 1400)

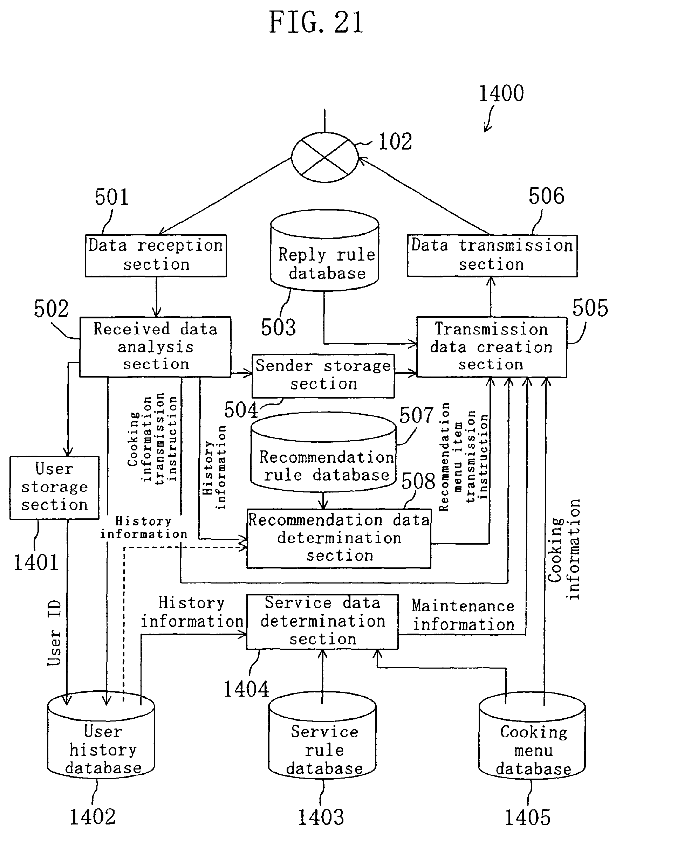

Referring to FIG. **21**, the server **1400** includes a user storage section **1401**, a user history database **1402**, a service rule database **1403**, and a service data determination section **1404,** in addition to the components of the server **101** of embodiment 1. Furthermore, the server **1400** further includes a cooking menu database **1405** in place of the cooking menu database **509**.

While a user continuously accesses the server **1400**, the user storage section **1401** stores information for specifying the user during the access. In the case where history information is accumulated, the history information needs to be stored so as to correspond to a user (user ID, or the like). On the other hand, since the correspondence between the history information and the information terminal device **103,** IP address, or the like is not always the same, a correspondence between a user ID and IP address is stored when an access from the information terminal device **103** to the server **1400** is started. During the continuous access, an IP address is converted to a user ID when history information is uploaded, or cooking information or the like is downloaded.

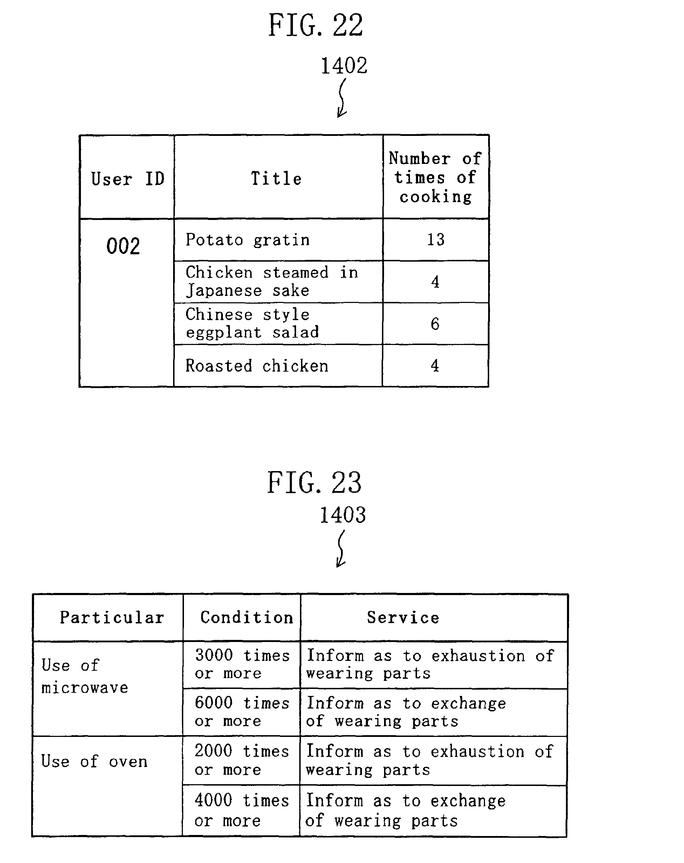

The user history database **1402** stores history information as to the use of the microwave oven **105** by a user, and download history information as to cooking information or maintenance information. Specifically, the number of times each menu item was cooked is stored so as to correspond to a user ID as shown in FIG. **22**.

The service data determination section **1404** determines which service information (such as maintenance information, or the like) is provided to the user.

The service rule database **1403** stores a rule for determining service information by the service data determination section **1404**, i.e., a rule and service details about the service provided to the user of the microwave oven **105**. Specifically, the service rule database **1403** stores service details which are offered according to the number of times of use for respective components of the microwave oven **105** (e.g., the oven heating section and the microwave heating section) as shown in FIG. **23**.

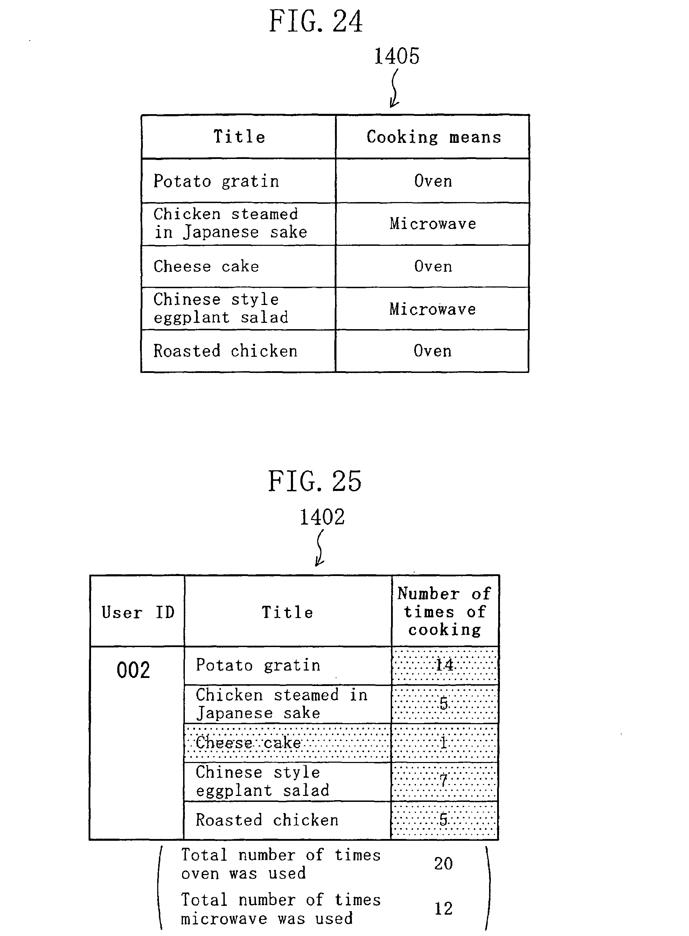

The cooking menu database **1405** stores information indicating a component of the microwave oven **105** which is used for cooking a certain menu item as shown in FIG. **24**, for example, in addition to the contents in the cooking menu database **509** of embodiment 1.

The microwave oven 105 and the information terminal device 103 employed in embodiment 2 are the same as those described in embodiment 1.

### (Operation of server 1400 when cooking information is provided.

In the server **1400** having the above structure, the operation for providing cooking information is basically the same as that in the server **101** of embodiment 1, except that when cooking information is provided, use history information of the microwave oven **105** and download history information of cooking information, or the like, are stored in the user history database **1402** so as to correspond to a user ID and used for providing maintenance information as described below. (It should be noted that the history information once stored in the user history database **1402** may be used for selecting a recommendation menu item.)

Specifically, when a user ID (e.g., "002") and password are input in the user ID input window (FIG. **13**) of the information terminal device **103** and transmitted to the server **1400,** the correspondence between the user ID and the IP address of the information terminal device **103** is stored in the user storage section **1401**. Based on the stored correspondence, the history information as to the use of the microwave oven **105**, or the like, is stored in the user history database **1402** so as to correspond to the user ID. When a new history information from the same user is received, the history information stored in the user history database **1402** is updated from the history information shown in FIG. **22** to the history information shown in FIG. **25**. The service data determination section **1404** calculates the total number of times each of the oven heating section and the microwave heating section is used based on the updated history information and the information indicating a component of the microwave oven **105** which is used for cooking each menu item stored in the cooking menu database **1405** (FIG. **24**). The service data determination section **1404** then compares the calculated number of times with the service details stored in the service rule database **1403** (FIG. **23**) which correspond to the numbers of times the respective components are used. If the number of times satisfies the condition for providing maintenance information, the transmission data creation section **505** is instructed to transmit, for example, a message which urges exchange of wearing parts, or the like. The message is transmitted from the data transmission section **506** to the information terminal device **103** together with, or independently of, the recommendation menu item and cooking information.

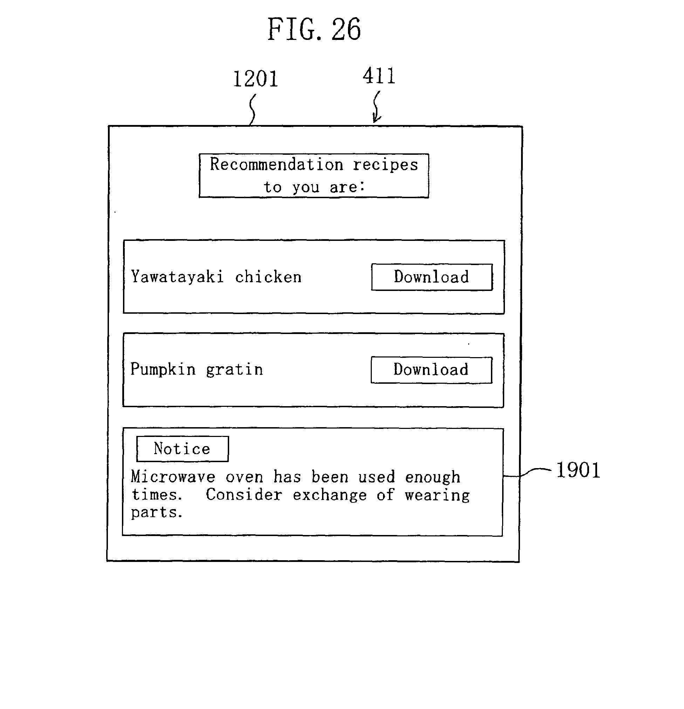

In the information terminal device **103**, the display section **411** displays, for example, a service message **1901** together with a recommendation menu item window **1201** as shown in FIG. **26**. With such a displayed message, maintenance can quickly be done so as to prevent a mechanical trouble. Such a service is significantly effective in a professional cooking apparatus, which is used much more frequently and causes bad influences on the business when it is in mechanical trouble.

In the example described above, in the information terminal device **103**, reading of history information from the recording medium **104** and writing of cooking information in the recording medium **104** are performed when the information terminal device **103** accesses the server **101**, but the present invention is not limited thereto. For example, history information may be read and stored in a memory of the information terminal device **103** prior to an access to the server **101**, and the received cooking information may be stored in the information terminal device **103** until the condition that an instruction is issued by a user, for example, is satisfied. Alternatively, transmission of history information to the server **101** and writing of history information in the recording medium **104** in the microwave oven **105** may be performed according to an instruction by a user. It should be noted, however, that in the case where transmission of history information and cooking information is automatically performed at the timing of insertion/removal of the recording medium **104** or at the start of an access to the server **101**, the user enjoys the convenience of obtaining desired cooking information in the end without particularly noticing such data transmission.

Furthermore, the present invention is not necessarily limited to an example where a recommendation menu item, or the like, is determined according to the latest history information. For example, a recommendation menu item may be determined according to previously acquired history information in the case where it is impossible to acquire new history information. Even with such an arrangement, information which is appropriate for a user to some extent can be provided because in general it is unlikely to happen that the preference of the user suddenly changes.

The number of recommendation menu items is not limited to 2 as shown in FIG. **19**, but may be a greater number or may be set by a user. The number of menu items selectable from a group of recommendation menu items is not limited to one. For example, a plurality of menu items may be selected, and cooking information of the respective selected menu items may be downloaded.

The information stored in the recording medium **104** and read by the data read section **402** is not limited to history information and cooking information, but may include information for specifying the recording medium **104**, information for specifying a user, etc.

Although the example of embodiment 2 described above provides cooking information and maintenance information, only maintenance information may be provided, or only cooking information may be provided as in embodiment 1. Also in embodiment 1, maintenance information may be provided in place of, or together with, cooking information. Furthermore, information (service details) stored in each of the above databases and provided are merely an example. Various types of information may be employed in place of, or together with, the cooking information. For example, an advertisement of a seller who sells food materials used for menu items contained in the cooking information or food materials used by a user may be displayed together with the cooking information. Alternatively, the cooking information may be associated with a delivery service of food materials.

Furthermore, history information of a user may be utilized in the service of informing about deficient food materials (nutrients, etc.) or the service of giving counsel about health.

The method of determining recommendation menu items is not limited to any particular method. For example, a method for estimating various preferences may be used, or randomness may be added to the determination method. Moreover, the calorie limitation or salt amount may be considered. Conversely, a food material less frequently eaten by a user may be recommended.

Although a microwave oven has been exemplified as a cooking apparatus in the above embodiments, the same effects can be obtained even in a different apparatus having a cooking function, such as an IH cooking heater, a toaster, a gas cooking stove, an electric rice cooker, etc.

A person associated with cooking whose preferences are reflected in history information, such as cooking experiences, favorite menu item registration, and the like, includes not only a meal eater and a cook, but also a person who has some relation to cooking with a cooking apparatus, such as an owner of a hotel or restaurant, and the like.

Although information is provided mainly to a cooking apparatus in the embodiments described above, information may be provided to a portable device which is capable of sending data to a cooking apparatus. For example, a device including an operation input section and a display section as shown in FIG. **3** may be detachable from a cooking apparatus, and a portable device which has the function of transmitting information to and receiving information from the cooking apparatus may be used. Furthermore, information providing means, such as a PDA (Personal Digital Assistant), a cellular phone, or the like, may be used to provide information to a person who uses a cooking apparatus, whereby information suitable to a user can readily be provided as described in the above embodiments. Moreover, it is possible to reduce the efforts required for selecting one or some from many pieces of data. With such features, recipes can readily be selected in the midst of various activities, such as shopping at a superstore or a market, a commute to the office or home, etc. Moreover, unnecessary tasks, such as unnecessary shopping, an arrangement and setup of shopping, or the like, can be reduced. Furthermore, a burden put on housewives, people working in a restaurant or hotel (including a purchasing agent, a cook, etc.), and the like, can be reduced. Especially, diet is a matter of daily concern, and therefore, a reduction of the efforts spent for diet-related tasks will save time for leisure or labor for other services.

### Industrial Applicability

According to the present invention, as described above, cooking information to be recommended is determined based on cooking information actually used in cooking, and therefore, information suitable to a user can readily be provided or obtained. Furthermore, it is possible to reduce the efforts of selecting one or some from many pieces of data.

## Claims

1. A cooking-related information providing system for providing to a cooking apparatus cooking-related information including cooking data which relates to at least one of a cooking procedure and a dish title, the system comprising:
selected information acquisition means for acquiring selected information which represents cooking data selected among the cooking data already obtained by the cooking apparatus according to a preference of a person associated with cooking;
cooking-related information selection means for selecting at least one piece of cooking-related information from a plurality of pieces of cooking-related information based on the selected information; and
cooking-related information providing means for providing the selected cooking-related information to the cooking apparatus.

2. A cooking-related information providing apparatus for providing to a cooking apparatus cooking-related information including cooking data which relates to at least one of a cooking procedure and a dish title, the apparatus comprising:
selected information acquisition means for acquiring selected information which represents cooking data selected among the cooking data already obtained by the cooking apparatus according to a preference of a person associated with cooking;
cooking-related information selection means for selecting at least one piece of cooking-related information from a plurality of pieces of cooking-related information based on the selected information; and
cooking-related information providing means for providing the selected cooking-related information to the cooking apparatus.

3. The cooking-related information providing apparatus of claim 2, wherein acquisition of the selected information by the selected information acquisition means and provision of the cooking-related information by the cooking-related information providing means are performed through communication means.

4. The cooking-related information providing apparatus of claim 2, wherein the selected information which represents the cooking data selected according to the preference of the person associated with cooking is information representing cooking data as to which cooking is done by the cooking apparatus according to the cooking procedure represented by the cooking data.

5. The cooking-related information providing apparatus of claim 4, wherein the selected information which represents the cooking data selected according to the preference of the person associated with cooking further includes information representing the frequency of cooking performed by the cooking apparatus according to the cooking procedure represented by the cooking data.

6. The cooking-related information providing apparatus of claim 5, wherein the cooking-related information includes information about maintenance of the cooking apparatus, the maintenance information corresponding to the frequency of cooking performed by the cooking apparatus.

7. The cooking-related information providing apparatus of claim 2, wherein the acquired selected information is abandoned after the provision of the cooking-related information.

8. The cooking-related information providing apparatus of claim 2, further comprising selected information accumulating means for accumulating the acquired selected information.

9. A cooking apparatus for acquiring cooking-related information including cooking data which relates to at least one of a cooking procedure and a dish title, the cooking apparatus comprising:
selected information output means for outputting selected information which represents cooking data selected among the cooking data already obtained by the cooking apparatus according to a preference of a person associated with cooking; and
cooking-related information acquisition means for acquiring at least one piece of cooking data selected from a plurality of pieces of cooking-related information based on the selected information.

10. The cooking apparatus of claim 9, wherein outputting of the selected information by the selected information output means and acquisition of the cooking-related information by the cooking-related information acquisition means are performed through communication means.

11. The cooking apparatus of claim 9, wherein outputting of the selected information by the selected information output means and acquisition of the cooking-related information by the cooking-related information acquisition means are performed through a removable recording medium.

12. The cooking apparatus of claim 9, wherein the selected information which represents the cooking data selected according to the preference of the person associated with cooking is information representing cooking data as to which cooking is done by the cooking apparatus according to the cooking procedure represented by the cooking data.

13. The cooking apparatus of claim 9, wherein the selected information which represents the cooking data selected according to the preference of the person associated with cooking further includes information representing the frequency of cooking performed by the cooking apparatus according to the cooking procedure represented by the cooking data.

14. The cooking apparatus of claim 9, wherein the cooking-related information includes information about maintenance of the cooking apparatus, the maintenance information corresponding to the frequency of cooking performed by the cooking apparatus.

15. A cooking-related information providing method for providing to a cooking apparatus cooking-related information including cooking data which relates to at least one of a cooking procedure and a dish title, the method comprising:
a selected information acquisition step of acquiring selected information which represents cooking data selected among the cooking data already obtained by the cooking apparatus according to a preference of a person associated with cooking;
a cooking-related information selection step of selecting at least one piece of cooking-related information from a plurality of pieces of cooking-related information based on the selected information; and
a cooking-related information providing step of providing the selected cooking-related information to the cooking apparatus.

16. A cooking-related information acquisition method for acquiring cooking-related information including cooking data which relates to at least one of a cooking procedure and a dish title, the method comprising:
a selected information output step of outputting selected information which represents cooking data selected among the already-obtained cooking data according to a preference of a person associated with cooking; and
a cooking-related information acquisition step of acquiring at least one piece of cooking-related information selected from a plurality of pieces of cooking-related information based on the selected information.

17. A cooking-related information providing program for providing to a cooking apparatus cooking-related information including cooking data which relates to at least one of a cooking procedure and a dish title, the program instructing a computer to execute the following steps:
a selected information acquisition step of acquiring selected information which represents cooking data selected among the cooking data already obtained by the cooking apparatus according to a preference of a person associated with cooking;
a cooking-related information selection step of selecting at least one piece of cooking-related information from a plurality of pieces of cooking-related information based on the selected information; and
a cooking-related information providing step of providing the selected cooking-related information to the cooking apparatus.

18. A cooking-related information acquisition method for acquiring cooking-related information including cooking data which relates to at least one of a cooking procedure and a dish title, the program instructing a computer to execute the following steps:
a selected information output step of outputting selected information which represents cooking data selected among the already-obtained cooking data according to a preference of a person associated with cooking; and
a cooking-related information acquisition step of acquiring at least one piece of cooking-related information selected from a plurality of pieces of cooking-related information based on the selected information.

19. A cooking-related information providing system for providing to a cooking apparatus cooking-related information including cooking data which relates to at least one of a cooking procedure and a dish title, comprising:
history information acquisition means for acquiring history information which represents cooking data selected in a cooking apparatus among the cooking data already obtained by the cooking apparatus;
cooking-related information selection means for selecting at least one piece of cooking-related information from a plurality of pieces of cooking-related information based on the selected information; and
cooking-related information providing means for providing the selected cooking-related information to at least one of the cooking apparatus and a person who uses the cooking apparatus.

## Amended claims

### Amended claims under Art. 19.1 PCT

**1.** (Canceled)

**2.** (Amended) A cooking-related information providing apparatus for providing to a cooking appliance cooking-related information including cooking data which relates to at least one of a cooking procedure and a dish title, the apparatus comprising:
history information acquisition means for acquiring history information which represents a use history of cooking data used according to a preference of a person associated with cooking in the cooking appliance;
cooking-related information selection means for selecting at least one piece of cooking-related information from a plurality of pieces of cooking-related information based on the history information and a recommendation rule which is used for determining a menu item to be recommended; and
cooking-related information providing means for providing the selected cooking-related information to the cooking appliance.

**3.** (Amended) The cooking-related information providing apparatus of claim 2, wherein acquisition of the history information by the selected information acquisition means and provision of the cooking-related information by the cooking-related information providing means are performed through communication means.

**4.** (Amended) The cooking-related information providing apparatus of claim 2, wherein the history information which represents the cooking data selected according to the preference of the person associated with cooking is information representing cooking data as to which cooking is done by the cooking appliance according to the cooking procedure represented by the cooking data.

**5.** (Amended) The cooking-related information providing apparatus of claim 4, wherein the history information which represents the cooking data selected according to the preference of the person associated with cooking further includes information representing the frequency of cooking performed by the cooking appliance according to the cooking procedure represented by the cooking data.

**6.** The cooking-related information providing apparatus of claim 5, wherein the cooking-related information includes information about maintenance of the cooking appliance, the maintenance information corresponding to the frequency of cooking performed by the cooking appliance.

**7.** (Amended) The cooking-related information providing apparatus of claim 2, wherein the acquired history information is abandoned after the provision of the cooking-related information.

**8.** (Amended) The cooking-related information providing apparatus of claim 2, further comprising history information accumulating means for accumulating the acquired history information.

**9.** (Amended) A cooking appliance for acquiring cooking-related information including cooking data which relates to at least one of a cooking procedure and a dish title, the cooking appliance comprising:
history information output means for outputting history information which represents a use history of cooking data used according to a preference of a person associated with cooking; and
cooking-related information acquisition means for acquiring at least one piece of cooking data selected from a plurality of pieces of cooking-related information based on the history information and a recommendation rule which is used for determining a menu item to be recommended.

**10.** (Amended) The cooking appliance of claim 9, wherein outputting of the history information by the history information output means and acquisition of the cooking-related information by the cooking-related information acquisition means are performed through communication means.

**11.** (Amended) The cooking appliance of claim 9, wherein outputting of the history information by the history information output means and acquisition of the cooking-related information by the cooking-related information acquisition means are performed through a removable recording medium.

**12.** (Amended) The cooking appliance of claim 9, wherein the history information which represents the use history of the cooking data used according to the preference of the person associated with cooking is information representing cooking data as to which cooking is done by the cooking appliance according to the cooking procedure represented by the cooking data.

**13.** (Amended) The cooking appliance of claim 9, wherein the history information which represents the use history of the cooking data used according to the preference of the person associated with cooking further includes information representing the frequency of cooking performed by the cooking appliance according to the cooking procedure represented by the cooking data.

**14.** The cooking appliance of claim 9, wherein the cooking-related information includes information about maintenance of the cooking appliance, the maintenance information corresponding to the frequency of cooking performed by the cooking appliance.

**15.** (Amended) A cooking-related information providing method for providing to a cooking appliance cooking-related information including cooking data which relates to at least one of a cooking procedure and a dish title, the method comprising:
a history information acquisition step of acquiring history information which represents a use history of cooking data used according to a preference of a person associated with cooking among the cooking data;
a cooking-related information selection step of selecting at least one piece of cooking-related information from a plurality of pieces of cooking-related information based on the history information and a recommendation rule which is used for determining a menu item to be recommended; and
a cooking-related information providing step of providing the selected cooking-related information to the cooking appliance.

**16.** (Amended) A cooking-related information acquisition method for acquiring cooking-related information including cooking data which relates to at least one of a cooking procedure and a dish title, the method comprising:
a history information output step of outputting history information which represents a use history of cooking data used according to a preference of a person associated with cooking; and
a cooking-related information acquisition step of acquiring at least one piece of cooking-related information selected from a plurality of pieces of cooking-related information based on the history information and a recommendation rule which is used for determining a menu item to be recommended.

**17.** (Amended) A cooking-related information providing program for providing to a cooking appliance cooking-related information including cooking data which relates to at least one of a cooking procedure and a dish title, the program instructing a computer to execute the following steps:
an information acquisition step of acquiring history information which represents a use history of cooking data used according to a preference of a person associated with cooking among the cooking data already obtained by the cooking appliance;
a cooking-related information selection step of recommending at least one piece of cooking-related information from a plurality of pieces of cooking-related information based on the history information and a recommendation rule which is used for determining a menu item to be recommended; and
a cooking-related information providing step of providing the recommended cooking-related information to the cooking appliance.

**18.** (Amended) A cooking-related information acquisition program for acquiring cooking-related information including cooking data which relates to at least one of a cooking procedure and a dish title, the program instructing a computer to execute the following steps:
a history information output step of outputting history information which represents a use history of cooking data used according to a preference of a person associated with cooking; and
a cooking-related information acquisition step of acquiring at least one piece of cooking-related information selected from a plurality of pieces of cooking-related information based on the history information.

**19.** (Amended) A cooking-related information providing system for providing to a cooking appliance cooking-related information including cooking data which relates to at least one of a cooking procedure and a dish title, comprising:
history information acquisition means for acquiring history information which represents a use history of cooking data used in a cooking appliance;
cooking-related information selection means for selecting at least one piece of cooking-related information from a plurality of pieces of cooking-related information based on the history information; and
cooking-related information providing means for providing the selected cooking-related information to at least one of the cooking appliance and a person who uses the cooking appliance.
